# EUROPEAN PATENT SPECIFICATION

(11) **EP 2 583 447 B1**
(45) Date of publication and mention of the grant of the patent: **28.11.2018**
(21) Application number: 10853760.6
(22) Date of filing: 21.06.2010
(51) Int. Cl.: H04L 29/06, H04L 29/08, H04M 3/42, G06F 15/177

(54) **METHOD AND ARRANGEMENT FOR NOTIFICATIONS IN A COMMUNICATION NETWORK**
VERFAHREN UND ANORDNUNG FÜR BENACHRICHTIGUNGEN IN EINEM KOMMUNIKATIONSNETZWERK
PROCÉDÉ ET AGENCEMENT POUR DES NOTIFICATIONS DANS UN RÉSEAU DE COMMUNICATION

(43) Date of publication of application: 24.04.2013
(73) Proprietor: Telefonaktiebolaget LM Ericsson (publ), 164 83 Stockholm (SE)
(72) Inventor: BOBERG, Christer, S-137 55 Tungelsta (SE); LINDGREN, Anders, S-125 74 Älvsjö (SE)
(74) Representative: Brann AB
(86) International application number: PCT/SE2010/050703
(87) International publication number: WO 2011/162646

(56) References cited:
- WO-A1-2008/115100
- WO-A1-2009/056171
- WO-A1-2009/056171
- US-A1- 2005 283 477
- US-A1- 2008 288 649
- HAIPENG JIN ET AL: "Using sigcomp to compress SIP/SDP messages", COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, vol. 5, 16 May 2005 (2005-05-16), pages 3107-3111, XP010825811, DOI: 10.1109/ICC.2005.1494974 ISBN: 978-0-7803-8938-0
- NIEMI K KISS NOKIA S LORETO ERICSSON A: "Session Initiation Protocol (SIP) Event Notification Extension for Notification Rate Control; draft-ietf-sipcore-event-rate-control-02.t xt", SESSION INITIATION PROTOCOL (SIP) EVENT NOTIFICATION EXTENSION FOR NOTIFICATION RATE CONTROL; DRAFT-IETF-SIPCORE-EVENT-RATE-CONTROL-02.T XT, INTERNET ENGINEERING TASK FORCE, IETF; STANDARDWORKINGDRAFT, INTERNET SOCIETY (ISOC) 4, RUE DES FALAISES CH- 1, no. 2, 8 January 2010 (2010-01-08), pages 1-23, XP015067470, [retrieved on 2010-01-08]
- Anonymous: "gzip", , 20 June 2010 (2010-06-20), XP055107081, Retrieved from the Internet: URL:http://en.wikipedia.org/w/index.php?ti tle=Gzip&oldid=369206439 [retrieved on 2014-03-12]
- HOURI IBM E AOKI AOL LLC S PARAMESWAR T RANG MICROSOFT CORPORATION V SINGH H SCHULZRINNE COLUMBIA U A: "Presence Interdomain Scaling Analysis for SIP/SIMPLE; draft-ietf-simple-interdomain-scaling-anal ysis-08.txt", PRESENCE INTERDOMAIN SCALING ANALYSIS FOR SIP/SIMPLE; DRAFT-IETF-SIMPLE-INTERDOMAIN-SCALING-ANAL YSIS-08.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. simple, no. 8, 27 August 2009 (2009-08-27), XP015063989, [retrieved on 2009-08-27]
- V. K. SINGH ET AL.: 'Presence Traffic Optimization Techniques' TECHNICAL REPORT, DEPARTMENT OF COMPUTER SCIENCE October 2006, USA, XP002486721
- V. SINGH ET AL.: 'Scaling Optimizations for Presence in SIP/SIMPLE' IETF STANDARD-WORKING-DRAFT; DRAFT-HOURI-SIMPLE-INTERDOMAIN-SCALING-OPTI MIZATIONS-00.TXT 01 July 2007, pages 1 - 19, XP015051005
- A. HOURI ET AL.: 'Problem Statement for SIP/SIMPLE' IETF STANDARD-WORKING-DRAFT; DRAFT-IETF-SIMPLE-INTERDOMAIN-SCALING-ANALY SIS-00.TXT 26 February 2007, pages 1 - 52, XP015049826

## Description

### Technical field

The invention relates generally to a method and notification service manager for providing notifications for terminal users in a communication network.

### Background

Multimedia services are becoming increasingly popular amongst terminal users in communication networks today. A particular example of emerging services is the so-called "presence" services which basically make data related to a specific client available to other clients over a communication network. In presence services, presence data of a client is collected and stored in a presence server and can then be delivered to clients subscribing to that presence data. The presence data may refer to a multitude of different parameters and characteristics of the clients, including information relating to, e.g., terminal status, capabilities, selections and settings, as well as information relating to the current situation of the client such as geographic location, physical environment and more personal client information, e.g. current interests and needs, personal characteristics, moods, and so forth.

This type of information is thus collected and stored on a continuous basis in presence servers based on publications received from the clients or from their access networks whenever any presence data for a client is introduced, updated, changed or deleted. A client may thus subscribe for selected presence data of one or more other clients. In this description, the term "watcher" generally represents a terminal user that subscribes to presence data of one or more other terminal users, while a "presentity" generally represents a terminal user that publishes presence data to be available for any authorised watchers.

The well-known protocol SIP (Session Initiation Protocol) is typically used as a framework for providing the above subscription, publication and delivery of presence data over the communication network. The SIP message called "SIP PUBLISH" is used to send presence data to the presence server for publication. Another SIP message called "SIP SUBSCRIBE" is used by watchers to subscribe for presence data of presentities. Yet another SIP message called "SIP NOTIFY" is used by presence servers to provide updated presence data to watchers.

A watcher often subscribes for presence data of a substantial number of presentities. In order to reduce the amount of subscriptions and the notification traffic to a particular watcher, an information delivery server has been developed called the "RLS" (Resource list Server), collecting notifications of presentities from their respective presence servers by means of so-called "back-end subscriptions", and sends a common notification to the watcher for all its presentities. In this way, the watcher does not have to establish subscriptions with multiple presence servers and it is also possible to reduce the messaging traffic and the number of required subscriptions since the RLS is used to as a single point to basically represent the presence servers involved.

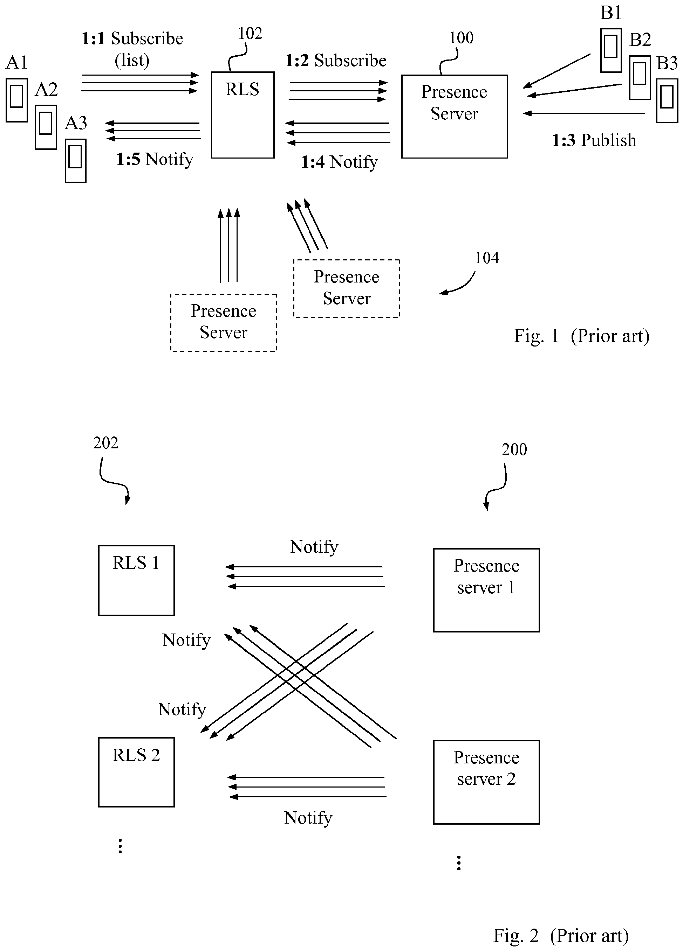

Fig. 1 illustrates an example according to the prior art, involving a presence server 100 operating to serve a group of clients B1, B2 and B3 acting as presentities, and an RLS 102 operating to provide presence data to another group of clients A1, A2 and A3 acting as watchers. In a first shown **action** 1:1, each watcher A1-A3 sends a subscription request to RLS 102 for presence data on the presentities B1-B3 which is typically done by referring to personally defined user lists. Thus, each watcher may have his/her own set of desired presentities in the user list although all the shown watchers A1-A3 subscribe to all the shown presentities B1-B3 in this simplified example. A client can of course act as both watcher and presentity. The RLS accordingly establishes a corresponding back-end subscription with the presence server 100 for each watcher A1-A3 in a next action 1:2.

Then, a further action 1:3 illustrates that presence data of the presentities B1-B3 is published and stored in the presence server 100, which is performed on a continuous basis and may well have started before actions 1:1 and 1:2. According to conventional solutions, the presence server 100 sends a notification message to the RLS 102, as shown in an action 1:4, basically each time a publication is made as of action 1:3, although solutions have been devised where the presence server accumulates an amount of published data for a particular watcher before sending it in a notification message directed to that watcher. The RLS 102 then duly sends the received notifications to respective watchers A1-A3, shown in another **action** 1:5. More presence servers 104 may likewise send notifications to the RLS 102 with published presence data relating to their associated presentities, as shown by further schematic arrows.

Given the great diversity of the presence data, it can be readily understood that the amount of notifications being sent from the presence servers 100, 104 to the RLS 102 can be huge, according to various ongoing back-end subscriptions on behalf of different watchers, imposing great load on the network for transmitting and handling these presence notifications. Moreover, the presence notifications of action 1:4 may be sent across two different operator domains and each notification basically requires establishment of a separate communication session between server 100 and RLS 102. The latter problem can be at least partly overcome by establishing a so-called "SIP tunnel" in which multiple presence notifications can be sent through the same session, as described in the document WO 2008/004962.

Fig. 2 illustrates another scenario where multiple presence servers 200 sends presence notifications to multiple RLS entities 202. For example, each presence server 1, 2 ... sends its notifications individually to each KIS entity 1, 2 ... resulting in great traffic load where the same notifications are sent separately multiple times to different EIS entities 202. As mentioned above, the notifications are typically sent across different operator domains requiring much network and node resources for handling the numerous messages.
V. K. SINGH ET AL.: "Presence Traffic Optimization Techniques", TECHNICAL REPORT, DEPARTMENT OF COMPUTER SCIENCE, October 2006 (2006-10), XP002486721, USA relates to a technique for traffic optimization in access network, inter-domain and intra-domain scenarios. Sending a common NOTIFY message for multiple watchers in inter-domain scenarios is discussed as well as bundling of NOTIFY message in inter-domain and access network scenarios. The common NOTIFY message aggregates NOTIFY for multiple watchers and the bundled NOTIFY aggregates NOTIFY from multiple presentities.
V. SINGH ET AL.: "Scaling Optimizations for Presence in SIP/SIMPLE", IETF STANDARD-WORKING-DRAFT; DRAFT-HOURI-SIMPLE-INTERDOMAIN-SCALING-OPTIMIZATIONS-OO.TXT, 1 July 2007 (2007-07-01), pages 1-19, XP015051005 relates to an internet draft for analyzing the scalability of presence systems and of the SIP based systems. Various optimizations techniques using the SIP/SIMPLE protocol are suggested. Aggregation of NOTIFY messages for multiple watchers is discussed. The domain A's presence server aggregates the notification messages and send them together as a single NOTIFY message to a presence server in domain B when a watcher from domain B SUBSCRIBE to multiple presentities in domain A. Further it is discussed that the domain B's presence server aggregates the success and failure responses for each watcher and send it to the presence server in domain A for updating about failure of NOTIFY delivery.
A. HOURI ET AL.: "Problem Statement for SIP/SIMPLE", IETF STANDARD WORKING-DRAFT; DRAFT-IETF-SIMPLE-INTERDOMAIN-SCALING-ANALYSIS OO.TXT, 26 February 2007 (2007-02-26), pages 1-52, XP015049826 relates to an internet draft for analyzing the traffic generated due to presence subscriptions between domains. Optimization to the SIMPLE protocol with the possible impact on load is analyzed. The complexity and the load handled by the presence server for providing the services on areas such as message load, state management, processing complexities and groups is discussed.
US 2005/283477 A1 relates to a technique for optimizing inter-domain event services. The technique includes receiving a first subscription request for an event state of an event source and determining a view associated with the first subscription request. The technique further includes sending a notify message reflecting a first defined view into the event state of the event source and receiving a second subscription request to receive the event state of the event source. The technique further includes determining a view associated with the second subscription request and determining if the first defined view corresponds to the second subscription request.

### Summary

It is an object of the invention to address at least some of the problems and issues outlined above. It is possible to achieve these objects and others by using a method and a notification service manager as defined in the attached independent claims.

According to one aspect, a method is provided in a first notification service manager operating for at least one notification server for providing notification data referring to a plurality of presentities and directed to a plurality of watchers in a communication network. In this method, a published notification data of the plurality of presentities is received, and the first notification service manager buffers multiple individual watcher specific notifications with the received notification data. At some point, the first notification service manager creates a joint notification for the plurality of watchers from the buffered multiple individual watcher specific notifications including compressing the buffered multiple individual watcher specific notifications such that the received notification data in the joint notification is compressed according to a shared library, where the shared library provides translations of specific data into abbreviated codes, known to the first notification service manager and a second notification service manager. Moreover, the joint notification is created when a predefined trigger condition is fulfilled. The predefined trigger condition includes an amount of the buffered multiple individual watcher specific notifications exceeding a preset limit. Further, the first notification service manager sends the joint notification towards the plurality of watchers when the predefined trigger condition is fulfilled.

According to another aspect, a first notification service manager operative for at least one notification server and is configured to provide notification data referring to a plurality of presentities and directed to a plurality of watchers in a communication network. The first notification service manager comprises a receiving module adapted to receive published notification data of the plurality of presentities. The first notification service manager also comprises a notification module adapted to buffer multiple individual watcher specific notifications with the received notification data in at least one notification buffer, and to create a joint notification for the plurality of watchers from the buffered multiple individual watcher specific notifications by compressing the buffered multiple individual watcher specific notifications according to a shared library, where the shared library provides translations of specific data into abbreviated codes, known to the first notification service manager and a second notification service manager. Moreover, the joint notification is created when a predefined trigger condition is fulfilled. The predefined trigger condition includes an amount of the buffered multiple individual watcher specific notifications exceeding a preset limit. The first notification service manager also comprises a sending module adapted to send the joint notification towards the plurality of watchers when the predefined trigger condition is fulfilled.

According to another aspect not forming part of the invention, a method is provided in a second notification service manager operating to provide notification data referring to a plurality of presentities and directed to a plurality of watchers in a communication network. In this method, the second notification service manager receives a joint notification comprising multiple individual watcher specific notifications with notification data of the presentities and directed to the watchers. The second notification service manager then splits the joint notification into the watcher specific notifications, and provides the watcher specific notifications individually for distribution to the respective watchers.

According to another aspect not forming part of the invention, an arrangement is provided in the second notification service manager configured to provide notification data referring to a plurality of presentities and directed to a plurality of watchers in a communication network. The second notification service manager comprises a receiving module adapted to receive a joint notification comprising multiple individual watcher specific notifications with notification data of the presentities and directed to the watchers. The second notification service manager also comprises a notification module adapted to split the joint notification into the watcher specific notifications, and a providing module adapted to provide the watcher specific notifications individually for distribution to the respective watchers.

The invention according to any of the above aspects can thereby provide the benefits of reducing the amount of subscriptions and notifications required and thus save bandwidth and processing resources.

The above methods and arrangements may be configured and implemented according to different embodiment. hone embodiment, the first notification service manager compresses the buffered watcher specific notifications to reduce the size of the joint notification and thus further save bandwidth and processing resources, which may be done in different ways. For example, the joint notification can be sent in a SIP message with a single SIP header while the different watcher specific notifications are included in the SIP message as separate entities in a multi-part document In another example, the joint notification includes multiple XML-type documents with different watcher specific notifications using a common schema. The notification information in the joint notification may also be compressed according to a shared library known to the first and second notification service managers.

In further embodiments, the first notification service manager creates and sends the joint notification when a predefined trigger condition is fulfilled, which could be when a preset time period expires and/ or when the amount of buffered watcher specific notifications has exceeded a preset limit Thereby, the notifications can be kept up-to-date and/ or the buffer will not be over-filled.

The first notification service manager may buffer the watcher specific notifications in separate notification buffers for plural RLS entities and send a separate joint notification with buffered watcher specific notifications to each RLS entity. The first notification service manager may operate for a plurality of notification servers in one operator domain to provide a single point of contact towards an opposite operator domain. Likewise, the second notification service manager may operate for a plurality of RLS entities in one operator domain to provide a single point of contact to wards an oppo site operator domain.

Further possible features and benefits of this solution will become apparent from the detailed description below.

### Brief description of drawings

The invention will now be described in more detail by means of exemplary embodiments and with reference to the accompanying drawings, in which:
Fig. 1 is a schematic block diagram illustrating a communication scenario with a presence server and an RLS entity, according to the prior art
Fig. 2 is a schematic block diagram illustrating another communication scenario involving multiple presence servers and RLS entities, according to the prior art
Fig. 3 is a schematic block diagram illustrating a communication scenario with a presence server and an RLS entity, according to an exemplary embodiment.
Fig. 4 is a schematic block diagram illustrating another communication scenario involving multiple presence servers and RLS entities, according to another exemplary embodiment.
Fig. 5 is a flow chart with actions performed by a first notification service manager operating for at least one notification server, according to another exemplary embodiment.
Fig. 6 is another flow chart with actions performed by a second notification service manager operating to provide notification data directed to a plurality of watchers, according to another exemplary embodiment
Fig. 7 is a block diagram illustrating a first notification service manager when operating for at least one notification server, according to further exemplary embodiments.
Fig. 8 is a block diagram illustrating a second notification service manager when operating for at least one RLS entity, according to further exemplary embodiments.

### Detailed description

Briefly described, the invention can be used to avoid transmission of numerous individual notifications from one or more notification servers to one or more RLS entities by buffering multiple watcher specific notifications in a managing entity operating for a notification server, and then sending a single joint notification containing the buffered watcher specific notifications to another managing entity operating for an RLS entity. The latter managing entity is then able to split the joint notification into the original multiple watcher specific notifications, and provide them individually to an RLS entity for further propagation to respective watchers.

In this description, these managing entities will be referred to as the first and second "notification service managers", respectively. In practice, the notification service may be the above-described presence service and the following examples and embodiments often refer to a presence service although the invention is not limited thereto. The term "presence data" when used here can thus be understood as being equivalent with "notification data". Further, the term RLS will be used for short to represent any server or entity that operates according to this solution to deliver information on any kind of notification data to subscribing watchers and the invention is not limited to using any particular type of information delivery server or entity on the watcher side. For example, the RLS entity described here could actually be a presence server, depending on the implementation.

The various notifications in the following examples may be communicated by means of the SIP protocol, e.g. in SIP NOTIFY messages and based on established subscriptions for notification data. Alternatively, the described notifications may be communicated without using SIP-based subscriptions, and the individual "subscriptions" for notification data of presentities for watchers in the following examples should be understood as any suitable agreements for delivering such notifications towards the watchers.

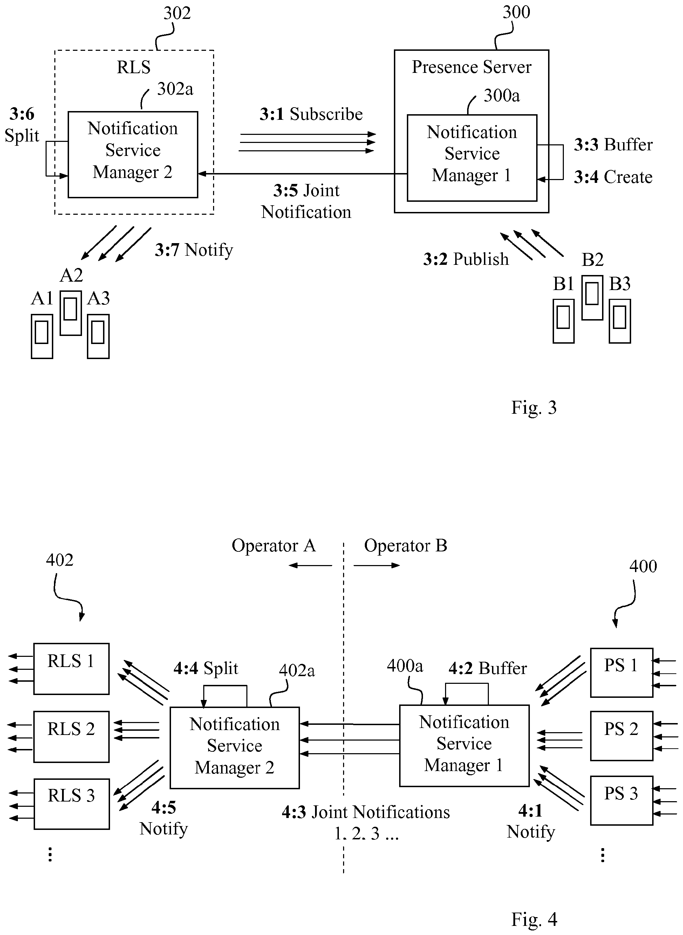

Fig. 3 illustrates a first example of how this invention can work when used in the context of a presence service, involving a presence server 300 serving a group of presentities B1-B3 and an RLS entity 302 serving a group of watchers A1-A3 subscribing to presence data of the presentities B1-B3. Of course, any number of watchers may subscribe to any type of presence data of any number of presentities, which in practice are typically far greater in numbers that in this example, e.g. in the magnitude of thousands of terminal users. A schematic first notification service manager 300a is configured in the presence server 300 and a schematic second notification service manager 302a is configured in the RLS entity 302. In practice, the managers 300a and 302a may be integrated within the presence server 300 and RLS 302, respectively, or implemented as separate nodes connected thereto. It is also possible that the second notification service manager 302a operates to provide watcher specific notifications directly to the watchers, i.e. not involving any RLS entity.

A **f**irst **action 3:1** illustrates that the RLS 302, in a conventional manner, establishes individual back-end subscriptions with presence server 300 for presence data of presentities B1-B3 on behalf of watchers A1-A3, e.g. as described in actions 1:1 and 1:2 above. The presentities B1-B3 also likewise publish their presence data to the presence server 300 in a conventional manner, in **action 3:2,** which again could be a more or less continuous process throughout, resulting in corresponding individual watcher specific notifications to be conveyed to the RLS 302 for further propagation to the watchers A1-A3.

During this process, the first notification service manager 300a in presence server 300 duly creates these individual watcher specific notifications with the received presence data and buffers the watcher specific notifications in a buffer associated to the RLS 302, illustrated by a further **action 3:3.** The first notification service manager 300a may supply presence data in notifications to more than one RLS and in that case a notification buffer is maintained for each RLS, which will be described in more detail later below.

At some point, manager 300a creates a single notification comprising all the buffered watcher specific notifications, as shown by a next **action 3:4,** in this description called a "joint notification". The joint notification thus includes all the individual notifications that have been created for specific watchers and buffered for delivery from the presence server 300 to the watcher side, e.g. to the RLS 302. The joint notification is then sent as a single message over to the second notification service manager 302a, in a following **action 3:5.** Thereby, much processing and bandwidth can be saved by sending the sole joint notification message in a single session instead of sending the individual notifications in multiple separate messages and/ or sessions in the conventional manner, particularly when sending the message across two operator domains. Using this solution, it is also possible to compress the joint notification in different ways to further save bandwidth and processing resources, which will be described in more detail later below.

The sending of the joint notification can be triggered when a predefined trigger condition is fulfilled, such as when a preset time period has expired, or when the amount of buffered watcher specific notifications has exceeded a preset limit, i.e. when the buffer is "full". Depending on the implementation, the trigger condition may comprise only one or both of these conditions such that the joint notification is sent as soon as either of them is fulfilled. For example, the buffer may sometimes become full very fast and before the preset time period has expired, or vice versa. The triggering time period may be set to ensure that the presence data in the individual notifications has not become "out-of-date" in some respect before delivery, yet gaining sufficient or desirable benefits of sending the single joint notification message instead of sending the individual notifications in separate messages and/ or sessions in the conventional manner.

When receiving the joint notification, the second notification service manager 302a splits it by extracting the watcher specific notifications therefrom, in an **action 3:6,** and creates multiple separate watcher specific notification messages which are basically provided to the RLS 302 which finally propagates them individually to the watchers A1-A3, as illustrated in a last shown **action 3:7.** Alternatively, the second notification service manager 302a may distribute the watcher specific notifications directly to the respective watchers, i.e. without involving any RLS entity. The process of buffering watcher specific notifications from received publications in the first notification service manager 300a and sending a joint notification to the second notification service manager 302a may continue as long as the back-end subscriptions are valid. The collection of watchers addressed in the individual watcher specific notifications in the joint notifications may thus change over time as new back-end subscriptions are introduced and old ones expire.

Fig. 4 illustrates a second example of how this invention can also work when a plurality of presence servers 400, each serving various presentities, and a plurality of RLS entities 402, each serving various watchers, are involved, although those presentities and watchers are not shown in this figure for simplicity. A schematic first notification service manager 400a is configured to operate for the presence servers 400 and a schematic second notification service manager 302a is configured to operate for the RLS entities 402. In this example, RLS entities 402 and presence servers 400 belong to different operator domains A and B, respectively, although the following procedure may of course be applied also when they belong to the same operator domain. The first and second notification service managers 400a and 400b can thus be implemented as separate nodes connected to the presence servers 400 and RLS entities 402, respectively.

Although no action for establishing back-end subscriptions between RLS entities 402 and presence servers 400 is shown in this figure, it is assumed that this has been done in a conventional manner. Thus, it is assumed that each RLS 402 has established individual back-end subscriptions with one or more of the presence servers 400 for presence data of presentities on behalf of various watchers, basically as described for both Fig. 1 and Fig. 3 above. Further, it is assumed that presentities served by the presence servers 400 are publishing their presence data on a more or less continuous basis in a conventional manner, as schematically illustrated by the arrows pointing towards respective presence servers 400.

In this example, each one of the presence servers 400 creates multiple individual watcher specific notifications with the received presence data, according to the above back-end subscriptions, and sends them to the first notification service manager 400a, illustrated a **f**irst **action 4:1,** which could likewise go on in a continuous manner as long as presence data is being published. In the meantime, manager 400a buffers the received watcher specific notifications in different notification buffers maintained for respective RLS entities 402, illustrated by a further **action 4:2.** It should be noted that in this scenario a specific presence server may have back-end subscriptions with several RLS entities, and vice versa.

In due course, the first notification service manager 400a creates and sends joint notifications, each containing buffered watcher specific notifications, to the second notification service manager 402a, in a further **action 4:3,** which may be triggered when a suitable trigger condition is fulfilled as described above. Thus, each joint notification is directed to a specific RLS and contains watcher specific notifications accumulated in the notification buffer specifically maintained for that RLS in the first notification service manager 400a. As shown in the figure, joint notification "1" is addressed to RLS "1", joint notification "2" is addressed to RLS "2", and so forth

In this way, only one notification message can be sent with watcher specific notifications from plural presence servers to each RLS entity. Effectively, the shared first and second notification service managers 400a act to "concatenate" multiple individual watcher specific notifications communicated across the operator domains A and B. The first notification service manager 400a thus operates for a plurality of presence servers 400 in operator domain B and provides a single point of contact to wards the opposite operator domain A for communicating presence notifications. likewise, the second notification service manager 402a operates for a plurality of RLS entities 402 in operator domain A and provides a single point of contact towards the opposite operator domain B for receiving the presence notifications.

It is also possible that a shared notification service manager 400a, 402a is employed at only one side such that the first notification service manager 400a sends joint notifications directly to the RLS entities 402, or the second notification service manager 402a receives joint notifications directly from the presence servers 400. In either way, much bandwidth and processing resources can be saved, e.g. as compared to the situation described for Fig. 2. The size of the joint notification message may be restricted, e.g. depending on the communication protocol, channel and processing resources used.

The second notification service manager 402a then splits each received joint notification 1, 2, 3,... into multiple individual watcher specific notifications in an **action 4:4,** and provides the watcher specific notifications individually to the respective RLS entities 402, in a final shown **action 4:5.** The RLS entities 402 can then further propagate the watcher specific notifications to respective watchers in a conventional manner, as schematically illustrated by the arrows pointing away from respective presence RLS entities 402. Splitting the received joint notifications 1, 2, 3,... is made separately for each joint notification since they typically arrive at different points in time, and actions 4:3 - 4:5 should be seen as a procedure for each joint notification.

The presence servers 300 and 400 in the examples above could be any type of notification servers handling any notification service. As mentioned above, creating the joint notification in the first notification service manager 300a or 400a may include compressing the buffered watcher specific notifications, which could be done according to different embodiments. In one embodiment, the first notification service manager sends the joint notification in a SIP message with a single SIP header while the different watcher specific notifications are included in the SIP message as separate entities in a multi-part document In another embodiment, the joint notification includes multiple XML-type documents with different watcher specific notifications using a common schema with information that is the same and valid for all the XML documents.

In yet another embodiment, e.g. when a joint notification is sent across different operator domains or within the same operator domain, the presence information in the joint notification is compressed according to a shared predefined "library" which is known to both notification service managers. This library thus provides translations of specific data into abbreviated "codes" or the like. Examples of compression methods that can be used are "gzip" and "deflate". Further, the joint notification may be encrypted by the first notification service manager 300a or 400a and sent in encrypted form, to be decrypted by the second notification service manager 302a or 402a when received.

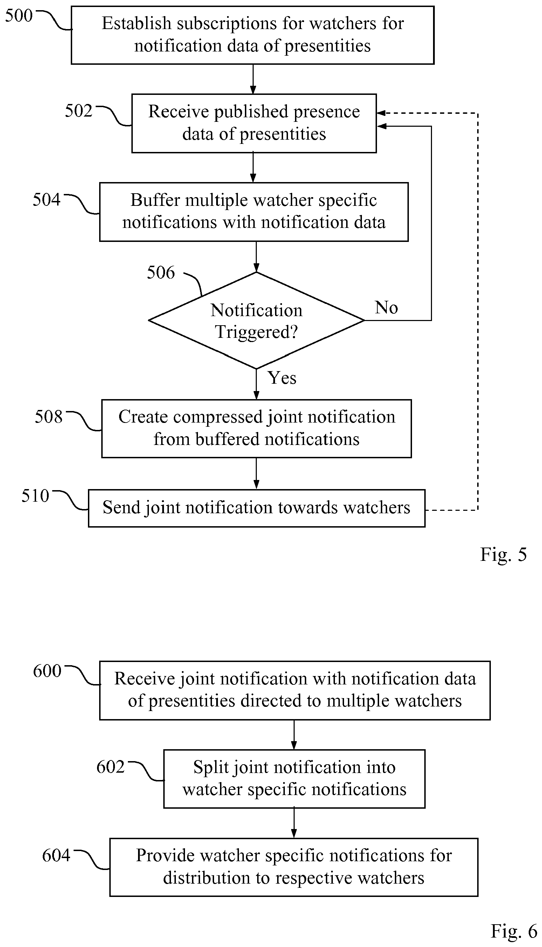

A procedure executed by a first notification service manager, will now be described with reference to the flow chart of Fig. 5. Similar to the examples of Fig. 3 and Fig. 4, the first notification service manager operates for at least one notification server, e.g. presence server, and is configured to provide notification data, referring to a plurality of presentities, directed to a plurality of watchers in a communication network. In a first optional **action 500,** the first notification service manager establishes individual back-end subscriptions for watchers, e.g. with one or more RLS entities, for notification data relating to the presentities. As in the example of Fig. 4 above, this action does not exclude that the first notification service manager may establish such back-end subscriptions for watchers with a plurality of RLS entities. In this context, the individual "subscriptions" for notification data of presentities for watchers can be any suitable agreements for delivering such notifications towards the watchers and the invention is not limited in this respect Further, the subscriptions for notification data may be established otherwise than by the first notification service manager, e.g. by another suitable node serving the watchers different from the first notification service manager, and in that case action 500 is omitted.

In a next **action 502,** various published notification data of the presentities is received, basically corresponding to action 3:2 in Fig. 3, and the first notification service manager creates and buffers multiple individual watcher specific notifications with the received notification data in a buffer associated to the watchers, in a further **action 504.** Actions 502 and 504 are basically performed on a more or less continuous basis.

It is then checked in a further **action 506** if a predefined trigger condition for making a joint notification for the watchers, e.g. served by a specific RLS, is fulfilled. The predefined trigger condition may be that a preset time period has expired, and/ or that the amount of buffered data has exceeded a preset limit, as described above. If the trigger condition is not fulfilled in action 506, the procedure returns to actions 502 and 504 of receiving further notification data and buffering further watcher specific notifications, respectively. On the other hand, if the trigger condition is found to be fulfilled in action 506, the first notification service manager creates a joint notification for the watchers from the buffered watcher specific notifications, in a next **action 508.**

The joint notification is then finally sent towards the watchers, e.g. to a corresponding RLS, in a final shown **action 510.** The procedure may then be repeated from action 502, as indicated by the dashed arrow. It should be noted that the procedure shown in Fig. 5 may also be used for more than one RLS entity involving corresponding back-end subscriptions, buffers and joint notifications. In that case, the trigger condition of action 506 is accordingly applied individually for the corresponding notification buffers maintained for the RLS entities.

A procedure executed by a second notification service manager, will now be described with reference to the flow chart of Fig. 6. Similar to the examples of Fig. 3 and Fig. 4, the second notification service manager may operate for at least one RLS entity and is configured to provide notification data referring to a plurality of presentities and directed to a plurality of watchers in a communication network, e.g. according to a presence service. It is assumed that one or more notification servers have established individual back-end subscriptions for watchers, e.g., with one or more RLS entities, for notification data relating to the presentities.

In a **f**irst **action 600,** the second notification service manager receives a joint notification comprising multiple individual watcher specific notifications with notification data of the presentities and directed to the watchers, e.g. a joint notification sent from the first notification service manager according to action 510 above. The joint notification may be directed to one of the RLS entities as described above. The second notification service manager then splits the received joint notification into the watcher specific notifications in a further **action 602,** and provides the watcher specific notifications individually for distribution to respective watchers, in a final shown **action 604.** As described for the examples of Fig. 3 and Fig. 4 above, the second notification service manager may be integrated in an RLS entity or implemented as a separate node that may be connected to one or more RLS entities. The second notification service manager may also distribute the watcher specific notifications directly to the respective watchers without involving any RLS entity.

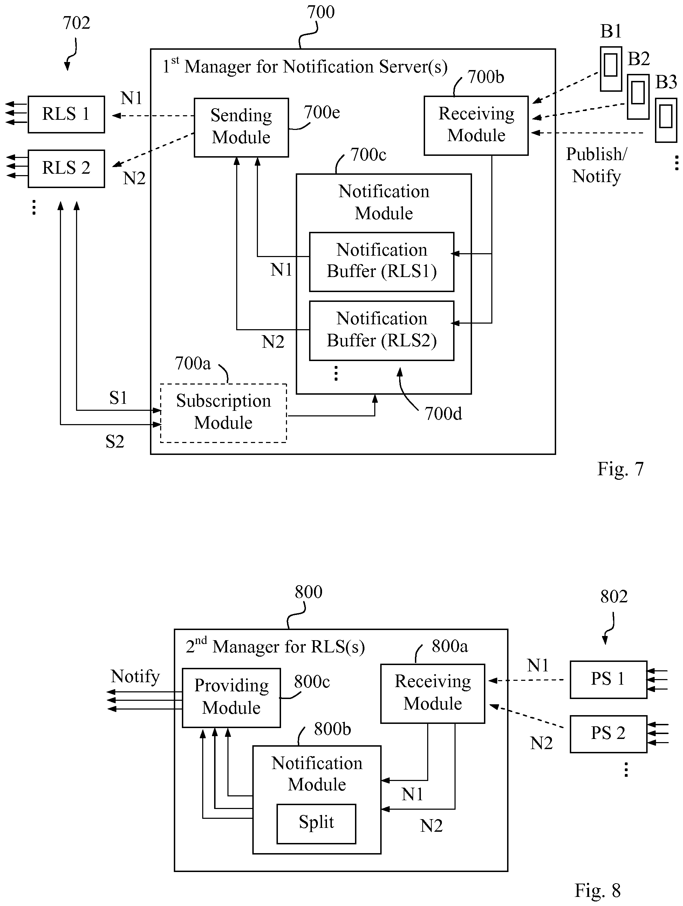

In Fig. 7, a first notification service manager 700 is illustrated when operating for at least one notification server, not shown, according to this solution. For example, the manager 700 may be used to provide any of the features and embodiments described above for the first notification service manager in the examples of Fig's 3, 4 and 5.

The first notification service manager 700 is configured to provide notification data referring to a plurality of presentities B1, B2, B3... and directed to a plurality of watchers, not shown, in a communication network. The first notification service manager 700 may comprise an optional **subscription module 700a** adapted to establish individual subscriptions S1, S2... with at least one RLS 702 for notification data of the presentities for the watchers. Alternatively, the subscriptions for notification data may be created by another node serving the watchers, different from the first notification service manager 700, depending on the implementation. The manager 700 further comprises a **receiving module 700b** adapted to receive published notification data of the presentities, e.g. as supplied in notification messages from the at least one notification server, not shown.

The manager 700 also comprises a **notification module 300c** adapted to buffer multiple individual watcher specific notifications with the received notification data in at least one notification buffer 700d, and to create a joint notification from the buffered watcher specific notifications. The manager 700 also comprises a **sending module 700e** adapted to send the joint notification towards the watchers, e.g. to an RLS entity serving the watchers.

The different modules in the first notification service manager 700 may be configured and adapted to provide further optional features and embodiments. In one exemplary embodiment, the notification module 700c is further adapted to create the joint notification by compressing the buffered watcher specific notifications. This compression can be made in different ways. For example, the sending module 700e may send the joint notification in a SIP message with a single SIP header, where the different watcher specific notifications are included in the SIP message as separate entities in a multi-part document Another possibility is that the notification module 700c is further adapted to compress the information in the joint notification according to a shared library known to the first and second notification service managers, as described above. The above compression may be employed both when the joint notification is sent across different operator domains and within the same operator domain.

The notification module 700c may also be adapted to create the joint notification when a predefined trigger condition is fulfilled, which may include that a preset time period has expired and/ or the amount of buffered watcher specific notifications has exceeded a preset limit.

In another embodiment, the subscription module 700a is further adapted to establish back-end subscriptions for watchers with plural RLS entities 702. In that case, the notification module 700c is further adapted to buffer the watcher specific notifications in separate notification buffers 700d maintained for respective RLS entities such that one notification buffer is created for RLS1, another notification buffer is created for RLS2, and so forth. In this scenario, the sending module 700e is further adapted to send a separate joint notification N1, N2... with buffered watcher specific notifications towards each RLS entity RLS1, RLS2..., respectively. When several notification buffers 700d are employed for respective RLS entities, each joint notification N1, N2... is handled independent of the other joint notification(s).

In Fig. 8, a second notification service manager 800 is illustrated when operating according to this solution, e.g. for at least one RLS entity, not shown. For example, the manager 800 may be used to provide any of the features and embodiments described above for the second notification service manager in the examples of Fig's 3, 4 and 6. Assuming that one or more presence or notification servers FS1, PS2... have established individual back-end subscriptions for watchers for notification data relating to presentities, the second notification service manager 800 is configured to provide notification data of the presentities directed to the watchers.

The second notification service manager 800 comprises a **receiving module 800a** adapted to receive a joint notification, N1 or N2, comprising multiple individual watcher specific notifications with notification data of the presentities directed to the watchers. The joint notification N1 or N2 may be received from a notification server 802 or from a first notification service manager, not shown, operating for at least one notification server 802.

Manager 800 further comprises a **notification module 800b** adapted to split the received joint notification into the above watcher specific notifications, e.g. basically as described for actions 3:6 and 4:4 above. Manager 800 also comprises a **providing module 800c** adapted to provide the watcher specific notifications individually for distribution to the respective watchers.

The different modules in the second notification service manager 800 may be configured and adapted to provide further optional features and embodiments. In one exemplary embodiment, if the joint notification has been created by compressing the buffered watcher specific notifications, the notification module 800b is further adapted to decompress the watcher specific notifications, which can be made in different ways. For example, the joint notification may be received in a SIP message with a single SIP header and a multi-part document where the different watcher specific notifications are included as separate entities. Alternatively, the joint notification may include multiple XML-type documents with different watcher specific notifications using a common schema with information valid for all the XML documents which is thus not duplicated unnecessarily. The notification module 800b may be further adapted to decompress the notification information in the joint notification according to a shared library, as described above. The above decompression may be employed both when the joint notification is sent across different operator domains and within the same operator domain.

Various functional entities in the first and second notification service managers 700 and 800 are called "modules" in this description, although they could also be seen as units, blocks, elements, components, or the like. It should be noted that Fig's 7 and 8 merely illustrate the managers 700 and 800 in a logical sense, although the skilled person is free to implement these functions in practice using suitable software and hardware means. Thus, the invention is generally not limited to the shown structure of the managers 700 and 800, while its functional modules 700a-e and 800a-c, respectively, may be configured to operate according to the methods and procedures described above for Fig's 3-6, where appropriate.

The functional modules 700a-e and 800a-c described above can be implemented as modules of computer programs, each comprising code means which when run by processors in the managers 700 and 800 cause the managers 700 and 800 to perform the above-described functions and actions. The computer programs may be carried by computer program products each comprising a computer readable medium on which the computer program is stored. For example, each computer program product may be a flash memory, ROM (Read-Only Memory) or an EEPROM (Electrically Erasable Programmable ROM), and the computer program modules described above could be distributed on different computer program products in the form of memories within the managers 700 and 800.

While the invention has been described with reference to specific exemplary embodiments, the description is generally only intended to illustrate the inventive concept and should not be taken as limiting the scope of the invention. The invention is defined by the appended claims.

## Claims

1. A method in a first notification service manager (300a, 400a) operating for at least one notification server (300, 400), of providing notification data referring to a plurality of presentities (B1, B2, B3) and directed to a plurality of watchers (A1, A2, A3) in a communication network, the method comprising:
- receiving (502) published notification data of the plurality of presentities (B1, B2, B3),
- buffering (504) multiple individual watcher specific notifications with the received notification data,
- creating (508) a joint notification for the plurality of watchers (A1, A2, A3) from the buffered multiple individual watcher specific notifications, including compressing the buffered multiple individual watcher specific notifications such that the received notification data in the joint notification is compressed according to a shared library, wherein the shared library provides translations of specific data into abbreviated codes, known to the first notification service manager (300a, 400a) and a second notification service manager (302a, 402a), wherein the joint notification is created when a predefined trigger condition is fulfilled, and wherein the predefined trigger condition includes an amount of the buffered multiple individual watcher specific notifications exceeding a preset limit, and
- sending (510) the joint notification towards said plurality of watchers (A1, A2, A3), when the predefined trigger condition is fulfilled.

2. The method according to claim 1, wherein the joint notification is sent in a Session Initiation Protocol, SIP, message with a single SIP header, and wherein different watcher specific notifications are included in the SIP message as separate entities in a multi-part document.

3. The method according to claim 1, wherein the joint notification includes multiple XML-type documents with different watcher specific notifications using a common schema.

4. A first notification service manager (700) operative for at least one notification server (300, 400), and configured to provide notification data referring to a plurality of presentities (B1, B2, B3) and directed to a plurality of watchers (A1, A2, A3) in a communication network, wherein the first notification service manager (700) comprises:
- a receiving module (700b) adapted to receive published notification data of the plurality of presentities (B1, B2, B3),
- a notification module (700c) adapted to buffer multiple individual watcher specific notifications with the received notification data in at least one notification buffer, and to create a joint notification (N1, N2...) for the plurality of watchers (A1, A2, A3) from the buffered multiple individual watcher specific notifications by compressing the buffered multiple individual watcher specific notifications according to a shared library, wherein the shared library provides translations of specific data into abbreviated codes, known to the first notification service manager (700) and a second notification service manager (800), wherein the joint notification (N1, N2...) is created when a predefined trigger condition is fulfilled, and wherein the predefined trigger condition includes an amount of the buffered multiple individual watcher specific notifications exceeding a preset limit, and
- a sending module (700e) adapted to send the joint notification (N1, N2...) towards said plurality of watchers (A1, A2, A3), when the predefined trigger condition is fulfilled.

5. The first notification service manager (700) according to claim 4, wherein the sending module (700e) is further adapted to send the joint notification (N1, N2...) in a Session Initiation Protocol, SIP, message with a single SIP header, and wherein the different watcher specific notifications are included in the SIP message as separate entities in a multi-part document.

6. The first notification service manager (700) according to claim 4, wherein the joint notification (N1, N2...) includes multiple XML-type documents with different watcher specific notifications using a common schema.

7. The first notification service manager (700) according to any of claims 4-6, wherein the notification module (700c) is further adapted to create the joint notification (N1, N2...) when the predefined trigger condition is fulfilled, said predefined trigger condition including expiry of a preset time period.

8. The first notification service manager (700) according to any of claims 4-7, wherein when individual subscriptions for the plurality of watchers (A1, A2, A3) have been established with plural Resource List Server, RLS, entities (702), the notification module (700c) is further adapted to buffer the multiple individual watcher specific notifications in separate notification buffers (700d) for respective RLS entities (702), and the sending module (700e) is further adapted to send a separate joint notification (N1, N2...) with the buffered multiple individual watcher specific notifications to each RLS entity.

9. The first notification service manager (700) according to any of claims 4-8, wherein the first notification service manager (700) is operative for a plurality of notification servers in one operator domain to provide a single point of contact towards an opposite operator domain.

10. The first notification service manager (700) according to any of claims 4-9, further comprising a subscription module (700a) adapted to establish individual subscriptions with at least one Resource List Server, RLS, for notification data of said plurality of presentities (B1, B2, B3) for the plurality of watchers (A1, A2, A3).

## Patentansprüche

1. Verfahren in einem ersten Benachrichtigungsdienstmanager (300a, 400a), der für mindestens einen Benachrichtigungsserver (300, 400) betrieben wird, zum Bereitstellen von Benachrichtigungsdaten, die sich auf eine Vielzahl von Präsenzidentitäten (B1, B2, B3) beziehen und an eine Vielzahl von Beobachtern (A1, A2, A3) in einem Kommunikationsnetzwerk weitergeleitet werden, wobei das Verfahren Folgendes umfasst:
- Empfangen (502) veröffentlichter Benachrichtigungsdaten der Vielzahl von Präsenzidentitäten (B1, B2, B3),
- Puffern (504) mehrerer individueller beobachterspezifischer Benachrichtigungen mit den empfangenen Benachrichtigungsdaten,
- Erzeugen (508) einer gemeinsamen Benachrichtigung für die Vielzahl von Beobachtern (A1, A2, A3) aus den gepufferten mehreren individuellen beobachterspezifischen Benachrichtigungen, enthaltend das Komprimieren der gepufferten mehreren individuellen beobachterspezifischen Benachrichtigungen, sodass die empfangenen Benachrichtigungsdaten in der gemeinsamen Benachrichtigung gemäß einer gemeinsamen Bibliothek komprimiert werden, wobei die gemeinsame Bibliothek Übersetzungen spezifischer Daten in abgekürzte Codes bereitstellt, die dem ersten Benachrichtigungsdienstmanager (300a, 400a) und einem zweiten Benachrichtigungsdienstmanager (302a, 402a) bekannt sind, wobei die gemeinsame Benachrichtigung erzeugt wird, wenn eine vordefinierte Auslösebedingung erfüllt ist und wobei die vordefinierte Auslösebedingung enthält, dass eine Menge der gepufferten mehreren individuellen beobachterspezifischen Benachrichtigungen einen vorgegebenen Grenzwert überschreitet, und
- Senden (510) der gemeinsamen Benachrichtigung an die Vielzahl von Beobachtern (A1, A2, A3), wenn die vordefinierte Auslösebedingung erfüllt ist.

2. Verfahren nach Anspruch 1, wobei die gemeinsame Benachrichtigung in einer Sitzungseinleitungsprotokoll (SIP)-Nachricht mit einem einzigen SIP-Kopf gesendet wird und wobei unterschiedliche beobachterspezifische Benachrichtigungen in der SIP-Nachricht als eigene Identitäten in einem mehrteiligen Dokument enthalten sind.

3. Verfahren nach Anspruch 1, wobei die gemeinsame Benachrichtigung mehrere Dokumente vom XML-Typ mit unterschiedlichen beobachterspezifischen Benachrichtigungen unter Verwendung eines gemeinsamen Schemas enthält.

4. Erster Benachrichtigungsdienstmanager (700), der für mindestens einen Benachrichtigungsserver (300, 400) betreibbar ist und der zum Bereitstellen von Benachrichtigungsdaten konfiguriert ist, die sich auf eine Vielzahl von Präsenzidentitäten (B1, B2, B3) beziehen und an eine Vielzahl von Beobachtern (A1, A2, A3) in einem Kommunikationsnetzwerk weitergeleitet werden, wobei der erste Benachrichtigungsdienstmanager (700) Folgendes umfasst:
- ein Empfangsmodul (700b), das zum Empfangen veröffentlichter Benachrichtigungsdaten der Vielzahl von Präsenzidentitäten (B1, B2, B3) beschaffen ist,
- ein Benachrichtigungsmodul (700c), das zum Puffern mehrerer individueller beobachterspezifischer Benachrichtigungen mit den empfangenen Benachrichtigungsdaten in mindestens einem Benachrichtigungspuffer und zum Erzeugen einer gemeinsamen Benachrichtigung (N1, N2 ...) für die Vielzahl von Beobachtern (A1, A2, A3) aus den gepufferten mehreren individuellen beobachterspezifischen Benachrichtigungen durch Komprimieren der gepufferten mehreren individuellen beobachterspezifischen Benachrichtigungen gemäß einer gemeinsamen Bibliothek beschaffen ist, wobei die gemeinsame Bibliothek Übersetzungen spezifischer Daten in abgekürzte Codes bereitstellt, die dem ersten Benachrichtigungsdienstmanager (700) und einem zweiten Benachrichtigungsdienstmanager (800) bekannt sind, wobei die gemeinsame Benachrichtigung (N1, N2 ...) erzeugt wird, wenn eine vordefinierte Auslösebedingung erfüllt ist und wobei die vordefinierte Auslösebedingung enthält, dass eine Menge der gepufferten mehreren individuellen beobachterspezifischen Benachrichtigungen einen vorgegebenen Grenzwert überschreitet, und
- ein Sendemodul (700e), das zum Senden der gemeinsamen Benachrichtigung (N1, N2 ...) an die Vielzahl von Beobachtern (A1, A2, A3) beschaffen ist, wenn die vordefinierte Auslösebedingung erfüllt ist.

5. Erster Benachrichtigungsdienstmanager (700) nach Anspruch 4, wobei das Sendemodul (700e) weiterhin zum Senden der gemeinsamen Benachrichtigung (N1, N2 ...) in einer Sitzungseinleitungsprotokoll (SIP)-Nachricht mit einem einzigen SIP-Kopf beschaffen ist und wobei unterschiedliche beobachterspezifische Benachrichtigungen in der SIP-Nachricht als eigene Identitäten in einem mehrteiligen Dokument enthalten sind.

6. Erster Benachrichtigungsdienstmanager (700) nach Anspruch 4, wobei die gemeinsame Benachrichtigung (N1, N2 ...) mehrere Dokumente vom XML-Typ mit unterschiedlichen beobachterspezifischen Benachrichtigungen unter Verwendung eines gemeinsamen Schemas enthält.

7. Erster Benachrichtigungsdienstmanager (700) nach einem der Ansprüche 4-6, wobei das Benachrichtigungsmodul (700c) weiterhin zum Erzeugen der gemeinsamen Benachrichtigung (N1, N2 ...) beschaffen ist, wenn die vordefinierte Auslösebedingung erfüllt ist, wobei die vordefinierte Auslösebedingung einen Ablauf eines vorbestimmten Zeitraumes enthält.

8. Erster Benachrichtigungsdienstmanager (700) nach einem der Ansprüche 4-7, wobei das Benachrichtigungsmodul (700c) weiterhin zum Puffern der mehreren individuellen beobachterspezifischen Benachrichtigungen in eigenen Benachrichtigungspuffern (700d) für jeweilige RLS-Identitäten (702) beschaffen ist und das Sendemodul (700e) weiterhin zum Senden einer eigenen gemeinsamen Benachrichtigung (N1, N2 ...) mit den gepufferten mehreren individuellen beobachterspezifischen Benachrichtigungen an jede RLS-Identität beschaffen ist, wenn individuelle Abonnements der Vielzahl von Beobachtern (A1, A2, A3) mit mehreren Ressourcenlistenserver (RLS)-Identitäten (702) errichtet wurden.

9. Erster Benachrichtigungsdienstmanager (700) nach einem der Ansprüche 4-8, wobei der erste Benachrichtigungsdienstmanager (700) für eine Vielzahl von Benachrichtigungsservern in einer Betreiberdomäne betreibbar ist, um einen einzigen Kontaktpunkt für eine andere Betreiberdomäne bereitzustellen.

10. Erster Benachrichtigungsdienstmanager (700) nach einem der Ansprüche 4-9, weiterhin umfassend ein Abonnementmodul (700a), das zum Errichten individueller Abonnements mit mindestens einem Ressourcenlistenserver (RLS) für Benachrichtigungsdaten der Vielzahl von Präsenzidentitäten (B1, B2, B3) für die Vielzahl von Beobachtern (A1, A2, A3) beschaffen ist.

## Revendications

1. Procédé, dans un premier gestionnaire de service de notification (300a, 400a) fonctionnant pour au moins un serveur de notification (300, 400), de fourniture de données de notification se référant à une pluralité de présentités (B1, B2, B3) et dirigé vers une pluralité d'observateurs (A1, A2, A3) dans un réseau de communication, le procédé comprenant :
- la réception (502) de données de notification publiées de la pluralité de présentités (B1, B2, B3),
- la mise en mémoire tampon (504) des multiples notifications spécifiques à un observateur individuel avec les données de notification reçues,
- la création (508) d'une notification conjointe pour la pluralité d'observateurs (A1, A2, A3) à partir des multiples notifications spécifiques un 'observateur individuel mises en mémoire tampon, incluant la compression des multiples notifications spécifiques à un observateur individuel mises en mémoire tampon de sorte que les données de notification reçues dans la notification conjointe soient compressées en fonction d'une librairie partagée, dans lequel la librairie partagée fournit des traductions des données spécifiques en codes abrégés, connus du premier gestionnaire de service de notification (300a, 400a) et d'un second gestionnaire de service de notification (302a, 402a), dans lequel la notification conjointe est créée lorsqu'une condition de déclenchement prédéfinie est remplie, et dans lequel la condition de déclenchement prédéfinie comprend une quantité des multiples notifications spécifiques à un observateur individuel mises en mémoire tampon dépassant une limite préétablie, et
- l'envoi (510) de la notification conjointe en direction de ladite pluralité d'observateurs (A1, A2, A3), lorsque la condition de déclenchement prédéfinie est remplie.

2. Procédé selon la revendication 1, dans lequel la notification conjointe est envoyée dans un message de protocole d'initiation de session, SIP, comportant un en-tête SIP unique, et dans lequel différentes notifications spécifiques à l'observateur sont incluses dans le message SIP en tant qu'entités distinctes dans un document en plusieurs parties.

3. Procédé selon la revendication 1, dans lequel la notification conjointe comprend plusieurs documents de type XML comportant différentes notifications spécifiques à l'observateur utilisant un schéma commun.

4. Premier gestionnaire de service de notification (700) fonctionnant pour au moins un serveur de notification (300, 400), et configuré pour fournir des données de notification se référant à une pluralité de présentités (B1, B2, B3) et dirigé vers une pluralité d'observateurs (A1, A2, A3) dans un réseau de communication, dans lequel le premier gestionnaire de service de notification (700) comprend :
- un module de réception (700b) adapté pour recevoir des données de notification publiées de la pluralité de présentités (B1, B2, B3),
- un module de notification (700c) adapté pour mettre en mémoire tampon de multiples notifications spécifiques à un observateur individuel avec les données de notification reçues dans au moins une mémoire tampon de notification, et pour créer une notification conjointe (N1, N2...) pour la pluralité d'observateurs (A1, A2, A3) provenant des multiples notifications spécifiques à un observateur individuel mises en mémoire tampon en compressant les multiples notifications spécifiques à un observateur individuel mises en mémoire tampon en fonction d'une librairie partagée, dans lequel la librairie partagée fournit des traductions de données spécifiques en codes abrégés, connus du premier gestionnaire de service de notification (700) et d'un second gestionnaire de service de notification (800), dans lequel la notification conjointe (N1, N2...) est créée lorsqu'une condition de déclenchement prédéfinie est remplie, et dans lequel la condition de déclenchement prédéfinie comprend une quantité des multiples notifications spécifiques à un observateur individuel dépassant une limite préétablie, et
- un module d'envoi (700e) adapté pour envoyer la notification conjointe (N1, N2...) en direction de ladite pluralité d'observateurs (A1, A2, A3), lorsque la condition de déclenchement prédéfinie est remplie.

5. Premier gestionnaire de service de notification (700) selon la revendication 4, dans lequel le module d'envoi (700e) est en outre adapté pour envoyer la notification conjointe (N1, N2...) dans un message de protocole d'initiation de session, SIP, comportant un en-tête SIP unique, et dans lequel les différentes notifications spécifiques à l'utilisateur sont incluses dans le message SIP en tant qu'entités séparées dans un document en plusieurs parties.

6. Premier gestionnaire de service de notification (700) selon la revendication 4, dans lequel la notification conjointe (N1, N2...) inclut plusieurs documents de type XML avec différentes notifications spécifiques à l'observateur utilisant un schéma commun.

7. Premier gestionnaire de service de notification (700) selon l'une quelconque des revendications 4-6, dans lequel le module de notification (700c) est en outre adapté pour créer la notification conjointe (N1, N2...) lorsque la condition de déclenchement prédéfinie est remplie, ladite condition de déclenchement prédéfinie incluant l'expiration d'une durée préétablie.

8. Premier gestionnaire de service de notification (700) selon l'une quelconque des revendications 4-7, dans lequel, lorsque des abonnements individuels pour la pluralité d'observateurs (A1, A2, A3) ont été établis avec des entités de serveur de liste de ressource, RLS, (702), le module de notification (700c) est en outre adapté pour mettre en mémoire tampon les multiples notifications spécifiques à un observateur individuel dans des mémoires tampons de notification distinctes (700d) pour les entités RLS respectives (702), et le module d'envoi (700e) est en outre adapté pour envoyer une notification conjointe distincte (N1, N2...) avec les multiples notifications spécifiques à un observateur individuel mises en mémoire tampon à chaque entité RLS.

9. Premier gestionnaire de service de notification (700) selon l'une quelconque des revendications 4-8, dans lequel le premier gestionnaire de service de notification (700) fonctionne pour une pluralité de serveurs de notification dans un domaine d'opérateur afin de fournir un point de contact unique en direction d'un domaine d'opérateur opposé.

10. Premier gestionnaire de service de notification (700) selon l'une quelconque des revendications 4-9, comprenant en outre un module d'abonnement (700a) adapté pour établir des abonnements individuels avec au moins un serveur de liste de ressource, RLS, pour les données de notification de ladite pluralité de présentités (B1, B2, B3) pour la pluralité d'observateurs (A1, A2, A3).
